# EUROPEAN PATENT SPECIFICATION

(11) **EP 2 814 653 B1**
(45) Date of publication and mention of the grant of the patent: **20.04.2016**
(21) Application number: 13705963.0
(22) Date of filing: 14.02.2013
(51) Int. Cl.: B29C 45/14, B32B 27/40

(54) **LOW-GLOSS SOFT-TOUCH THERMOFORMABLE PAINT FILM LAMINATE**
MATTGLÄNZENDE WÄRMEFORMBARE SOFTTOUCH-FARBFOLIENBESCHICHTUNG
STRATIFIÉ DE FILM DE PEINTURE THERMOFORMABLE DOUX AU TOUCHER ET À FAIBLE BRILLANCE

(30) Priority: 17.02.2012 EP 12155961
(43) Date of publication of application: 24.12.2014
(73) Proprietor: Akzo Nobel Coatings International B.V., 6824 BM Arnhem (NL)
(72) Inventor: AMICK, Matthew, Paul, Warren, MI 48092 (US); YAHKIND, Alexander, Leo, West Bloomfield, MI 48323 (US); KOSTECKI, James, Anthony, Troy, MI 48084 (US); SONG, Quan, Lancaster SC 29720 (US)
(74) Representative: Akzo Nobel IP Department
(86) International application number: PCT/EP2013/052915
(87) International publication number: WO 2013/120922

(56) References cited:
- EP-A2- 0 302 712
- WO-A1-2010/091823
- US-A1- 2003 211 334
- US-A1- 2004 258 924
- US-A1- 2006 078 745

## Description

The invention relates to a low-gloss soft-touch thermoformable paint film laminate. The invention further relates to a process of providing a substrate with a low-gloss soft-feel surface.
In the automotive and consumer electronics industries, more and more plastic parts are being used due to cost reduction, weight reduction, recyclability, etc. In the consumer electronics industry, many thin metal parts are used as well. Soft-touch coatings are being developed to give hard plastic or metal surfaces smooth and soft haptic properties. They are gaining increased attention in the automotive and consumer electronics industries.

In modern car interiors, soft-touch coatings are used to coat plastic parts such as instrument panels, door panels, arm rests, head rests, airbag covers, glove compartment covers, and center consoles. Parts coated in this way convey a feeling of smoothness and luxury similar to leather or velvet. In consumer electronics, soft-touch coatings are used to coat plastic or metal parts such as laptop covers and casings, computer housings, cell phone covers and casings, and other personal electronic devices to give a similar smooth or velvet feeling.

Although coatings for many of these applications are traditionally spray applied, there is a growing interest in being able to decorate plastic parts in-mould, saving time, energy, and raw materials to spray and cure the coating. Also, due to the difficulty involved in spray coating porous surfaces, there is a growing interest in decorating the part by forming cured films over finished parts. Soft to the touch is desirable for many moulding and forming applications, but is difficult to achieve using traditional decorative film casting and dry paint transfer techniques.

In a traditional spray coating application, the primer is applied on the substrate followed by the base coat and finally the top coat. This allows the formulator to utilize the interactions at the top coat - air surface interface, imparting slip, surface micro-roughness, soft-touch, or other properties to the top layer. In standard film casting, the top coat is cast on a removable carrier film first, followed by other clear coat or effect layers and finally a primer/adhesive layer is cast. This prohibits the use of the top coat - air surface interface to achieve desired properties, as the air surface that is created when the top coat is cast on the carrier, is coated with the next layer of film. Therefore, in standard film casting processes, the formulator must utilize the carrier film to impart any desired properties to the top coat layer.
Patent application US 2006/0078745 A is directed to composite mouldings of thermoplastically formable composite films having a layer of a soft-touch coating on a carrier film and a layer of back-injected, back-cast or back-pressed thermoplastic opposite the soft-touch coating. The soft-touch coating is formed with the soft-touch surface exposed to the air and includes crosslinked thermosetting materials.
Patent application US 2003/0211334 A relates to the use of dry paint transfer techniques for producing an interior automotive laminate used as functional interior component for covering instrument panels and the like. The low-gloss, soft-touch coating is formed by the surface micro-roughness transfer from a matte release liner. Furthermore, thermoforming is required to achieve the lowest gloss.

A drawback of the known thermoformable laminates is that they exhibit insufficient resistance properties to pass the specifications of automotive OEM or consumer electronics manufacturers. Furthermore, the soft-feel and low-gloss properties may deteriorate during the casting, curing, laminating, thermoforming, and injection moulding processes. The thermoforming requirement in order to achieve extremely low gloss levels makes a laminate unsuitable for applications where the film is not thermoformed. A lot of smaller parts and automotive trim pieces are decorated by a process where the laminate is not pre-stretched prior to making the final part. Also, the matte release liner must remain on the soft-feel top coat surface throughout the lamination and thermoforming processes. If removed prior to that, it will result in points or areas of shine in the top coat surface and a decrease in soft-feel texture.

The invention seeks to alleviate the above-mentioned drawbacks, and more in particular to provide a low-gloss soft-touch paint film laminate suitable for moulding and forming applications which can be prepared without the use of matte release liners. The paint film laminate should also be adaptable to impart colours, faux metal finishes, printed designs, and other decorations.
In addition, the low-gloss and soft-touch properties should be retained through the casting, curing, laminating, thermoforming, and injection moulding processes. It is also desired that the film can withstand the typical testing requirements seen in automotive interiors and consumer electronics.

The invention now provides a thermoformable paint film laminate comprising, in the following order,
a) a backing sheet layer of thermoplastic resin,
b) optionally, an adhesive layer
c) at least one intermediate,
d) a low-gloss soft-feel layer having a surface having a gloss at 60° of at most 20 gloss units,
e) a pressure-sensitive adhesive layer having a higher adhesion to the removable protective layer f) than to the low-gloss soft-feel layer d), and
f) a removable protective layer,
wherein the low-gloss soft-feel layer d) is obtained by applying a liquid coating composition on the base coat layer c) and drying and curing the liquid coating composition, and wherein the liquid coating composition comprises a polycarbonate diol and a hydroxyl-reactive crosslinker.

The laminate of the invention is suitable for moulding and forming applications which can be prepared without the use of matte release liners. The paint film laminate is adaptable to impart colours, faux metal finishes, printed designs, and other decorations.
In addition, the low-gloss and soft-touch properties are retained through the casting, curing, laminating, thermoforming, and injection moulding processes. The paint film laminate can withstand the typical testing requirements seen in automotive interiors and consumer electronics.
Gloss is an optical property, which is based on the interaction of light with physical characteristics of a surface. It is actually the ability of a surface to reflect light into the specular direction. The factors that affect gloss are the refractive index of the material, the angle of incident light, and the surface topography. Gloss can be said to be a view of material appearance. Materials with smooth surfaces appear glossy, while very rough surfaces reflect no specular light and appear dull. Chalk is an example of a very rough surface that reflects little to no specular light.
Specular reflection is measured with a specular gloss meter, and reported in gloss units. Unpolarized white light is concentrated by a condenser lens onto a field aperture, which is located in the focal plane of the source lens. The reflected beam at the surface is later collected by the receptor lens. The intensity of the beam is then measured through a photodetector. The common angles of incidence for gloss measurement are 20°, 60°, and 85°. A typical standards for gloss measurements is ASTM D 2457.

### The backing sheet

The backing sheet suitably comprises or consists of a thermoplastic polymer. Examples of suitable polymers include polyesters, polycarbonates, polyacrylates, and polysulfones. It is also possible to use mixtures or blends of polymers. The backing sheet may optionally be pretreated by processes such as corona treatment. The backing sheet preferably has thicknesses of between 2 and 2,000 micrometers. The backing sheet can also be composite film of several layers.
Suitable polycarbonates preferably have a molecular weight in the range from 10,000 to 60,000 g/mol. Such polycarbonates are commercially available.

Examples of suitable polyesters are polybutylene terephthalate and polyethylene terephthalate, and polyesters of cyclohexanedicarboxylic acid and cyclohexanedimethanol.
In one embodiment, the backing sheet layer a) comprises a thermoplastic copolymer of acrylonitrile, butadiene, and styrene (ABS).

### The at least one intermediate layer

The at least one intermediate layer may be a primer layer, or a base coat layer, or a combination thereof. The optional primer layer, if present, is typically located between the backing sheet layer and the base coat layer. The primer layer may serve to improve the bond between the backing sheet and subsequent layers. The primer layer may comprise an acrylic resin.

The base coat layer is suitably prepared from a liquid base coat composition. The base coat composition can be a water-based coating composition, wherein water is the primary liquid diluent, or an organic solvent-based coating composition, wherein a volatile organic solvent is the primary liquid diluent. The base coat composition generally comprises a film forming binder. Examples of polymers suitable as film-forming binder are polyurethanes, polyesters, polyacrylates, and mixtures thereof. The base coat composition preferably also comprises one or more pigments to provide colour and/or effects to the base coat layer. Optionally, the pigments may be pre-treated to modify the properties. Examples of suitable pigments include metallic pigments such as aluminium and stainless steel; nacreous pigments, such as mica coated with a metal oxide such as iron oxide and/or titanium dioxide; inorganic pigments, such as titanium dioxide, iron oxide, carbon black, silica, kaolin, talc, barium sulphate, lead silicate, strontium chromate, and chromium oxide; and organic pigments, such as phthalocyanine pigments.
The base coat or base coat composition may be applied directly to the backing layer. When an intermediate primer layer is present, the base coat composition is applied to the primer layer. Examples of suitable application techniques are printing, roller coating, spraying, brushing, sprinkling, flow coating, dipping, slot die coating. Alternatively, the base coat may be applied by laminating.

### The low-gloss soft-feel layer

The low-gloss soft-feel layer has a surface having a gloss at 60° of at most 20 gloss units. The low-gloss soft-feel layer d) is obtained by a applying a liquid coating composition on the base coat layer c) and drying and curing the liquid coating composition. The liquid coating composition comprises a polycarbonate diol and a hydroxyl-reactive crosslinker. The liquid coating composition can be a water-based coating composition, wherein water is the primary liquid diluent, or an organic solvent-based coating composition, wherein a volatile organic solvent is the primary liquid diluent. The required low-gloss soft-feel properties of the surface of the coating can be achieved by specific properties of the binders or by using additives, or by a combination thereof. Additives include silica particles or polyurea particles.

The polycarbonate diols may be produced in a conventional manner known to the person skilled in the art. For example, the polycarbonate diols may be synthesized by performing ester exchange between a lower dialkyl carbonate, such as dimethyl carbonate, and one or more diols , e.g., a mixture comprising 1,5-pentanediol and 1 ,6-hexanediol as major components and, optionally, other aliphatic glycols as minor components, in the presence of a catalyst customarily employed for ester exchange reaction. Suitable polycarbonate diols based on 1,5-pentanediol and 1,6-hexanediol and their preparation are described, for example, in EP 302 712.

Suitable polycarbonate diols are also commercially available, for example, under the trade name Duranol^{®} from Asahi Kasei Chemicals Corporation or Oxymer from Perstorp.

Other binders and polyols may be present as well in the liquid coating composition. However, it is preferred that the non-volatile crosslinkable film-forming component of the liquid coating composition comprises at least 50% by weight, for example between 80 and 100% by weight, of polycarbonate diol.

The liquid coating composition also comprises a hydroxyl-reactive crosslinker. Examples of suitable hydroxyl-reactive crosslinkers are polyisocyanate and melamine based crosslinkers.
Suitable polyisocyanates are those known to the skilled person. They are commercially available from various sources, for example from Bayer under the trade designation Desmodur^{®}. Examples of melamine resins are partially or fully etherified melamine-formaldehyde resins. They are commercially available, for example from Cytek under the trade designation Cymel^{®}.

Upon drying and curing of the coating composition, the polyol and the polyisocyanate or melamine resin react to form a crosslinked polymer network. Depending on the desired curing temperature and the desired pot life of the coating composition, the polyisocyanate may also be employed in blocked form.

The coating composition can further comprise other components and additives conventionally present in coating compositions, such as extenders, pigment dispersants, emulsifiers (surfactants), rheology-controlling agents, levelling agents, flatting agents, coalescents, wetting agents, anti-cratering agents, antifoaming agents, biocides, plasticizers, UV absorbers, light stabilizers, and odour masking agents.
In one embodiment the coating composition also comprises a curing catalyst for the reaction of the hydroxyl groups of the polycarbonate diol and the hydroxyl-reactive crosslinker.

Examples of curing catalysts for isocyanates are metal based curing catalysts and basic catalysts. Suitable metals include zinc, cobalt, manganese, zirconium, bismuth, and tin. It is preferred that the coating composition comprises a tin based catalyst. Well-known examples of tin based catalysts are dimethyl tin dilaurate, dimethyl tin diversatate, dimethyl tin dioleate, dibutyl tin dilaurate, dioctyl tin dilaurate, and tin octoate. As an example of a basic catalyst diazabicyclo[2.2.2]octane may be mentioned. Suitable catalysts for melamine resins are acidic catalysts.

The low-gloss soft-feel coating is obtained by applying the coating composition on the base coat layer. Examples of suitable application techniques are printing, roller coating, spraying, brushing, sprinkling, flow coating, dipping, and slot die coating. Subsequently, the coating composition is dried to form the low-gloss soft-feel coating layer. Drying includes evaporation of liquid diluent, such as water or a volatile organic solvent, and optionally curing by chemical reaction to form a crosslinked network. Drying can be carried out at ambient temperature. Alternatively, drying can be carried out at elevated temperature, for example in the range of 80 to 180°C. Drying typically occurs with the surface of the coating being exposed to the atmosphere or a protective gas. A sheet to impart specific surface properties to the coating layer is not required.

The low-gloss soft-feel layer is preferably a clear coat layer. This means that the layer is essentially transparent. In that case, the colour and/or effect properties of the base coat layer are visible through the low-gloss soft-feel layer. The combination of a colour and/or effect-imparting base coat layer and a clear low-gloss soft-feel layer provides paint film laminates having desired colours, faux metal finishes, printed designs, and other decorations implemented in the base coat layer and being visible through the low-gloss soft-feel layer. The low-gloss soft-feel layer provides additional protection to the decoration provided by the base coat layer. The protective properties of the low-gloss soft-feel layer are enhanced when the layer comprises a crosslinked polymer.
The low-gloss soft-feel layer generally has a layer thickness of at least 20 µm, or at least 25 µm, or at least 35 µm. The layer thickness generally does not exceed 60 µm. Typically, the layer thickness may be in the range of 25 to 50 µm.
The low-gloss soft-feel layer has a surface having a gloss at 60° of at most 20 gloss units. It is preferred that the gloss is even lower, for example at most 10 gloss units. It is also preferred that the low-gloss values are preserved during the lamination and thermoforming processes, in order to obtain a decorated surface having desired low-loss soft-feel properties.

### The pressure-sensitive adhesive layer

The pressure-sensitive adhesive layer can be based on any suitable pressure-sensitive adhesive material, provided that the pressure-sensitive adhesive has a higher adhesion to the removable protective layer described below than to the low-gloss soft-feel layer. Suitable adhesives can be selected by the skilled person by carrying out simple tests.

### The removable protective layer

The removable protective layer generally is a sheet that provides sufficient protection to the low-gloss surface of the paint film laminate during storage and handling. The materials for the removable protective layer are not critical. The polymers mentioned above for the backing layer may be used. However, paper, thin metal sheets, or composite materials are suitable as well.

The paint film laminate of the invention can be made according to known methods. In one embodiment, the layers b) to f) may be applied successively to the backing sheet layer. The layers can be applied as liquid compositions, followed by a drying step. Conventional application methods, such as casting, spraying, or printing may be used. The layers b) to f) may also be applied as a dry film transfer wherein the layers are laminated to the backing sheet layer with a hot roll laminator. The backing sheet layer may also be extruded onto layers b) to f).

In one embodiment, an intermediate multilayer paint film structure may be applied to an ABS or TPO backing sheet by hot roll laminating the backing sheet to layer b) or c) of the intermediate structure. Alternatively, it is possible to extrude the ABS or TPO resin directly onto the intermediate structure. This is suitable for creating a thick sheet for further processing. A typical thickness of the backing sheet for the lamination process is between 200 and 750 µm. This typical paint film laminate is then injection mould processed to create the rigid, thick part. An alternative to laminating and injection moulding is to create the thick substrate backing on the paint film in one step by extruding. The extruded thick sheet film structure can be high-pressure thermoformed into a shape for the desired final part. Extrusion is similar to how one might die coat a clear coat onto the PET carrier. Through a series of rollers, the film passes by an extruder die where the desired substrate resin is deposited on the film, melt bonding to the film.

The invention also relates to processes of providing a substrate with a low-gloss soft-feel surface wherein the thermoformable paint film laminate is used.
In one embodiment, the process comprises the steps of
a) providing a thermoformable paint film laminate as described above,
b) removing the removable protective layer,
c) thermoforming the thermoformable paint film laminate to a three-dimensional configuration corresponding to the shape of the substrate, and
d) back-injecting, back-pressing, back-casting or back-foaming the backing sheet layer of the thermoformed paint film laminate with a thermoplastic or thermohardening resin.
This embodiment is particularly useful when the backing sheet of the paint film laminate does not comprise an adhesive layer on the side opposite to layers b) to f).
Alternatively, when the backing sheet of the paint film laminate comprises an adhesive layer on the side opposite to layers b) to f), the process comprises the steps of
a) providing a thermoformable paint film laminate as described above,
b) removing the removable protective layer,
c) thermoforming the thermoformable paint film laminate to a three-dimensional configuration corresponding to the shape of the substrate, and
d) adhesively bonding the thermoformed paint film laminate to the substrate, wherein the adhesive layer on the backing sheet faces the surface of the substrate.

A further alternative embodiment of the process comprises the steps of
a) providing a thermoformable paint filmwith layers b) to f) as described above,
b) extruding the backing sheet layer and/or substrate onto layer b)
c) removing the removable protective layer and,
d) thermoforming the thermoformable paint film laminate with extruded substrate to a three-dimensional configuration corresponding to the desired final part.

### Examples

### Example 1

A paint film laminate according to the invention was prepared, having
a) a backing sheet layer of thermoplastic polyolefin,
b) an adhesive layer,
c) a primer layer,
d) a clear low-gloss soft-feel layer,
e) a pressure-sensitive adhesive layer, and
f) a removable protective layer of polyethylene terephthalate.

The clear low-gloss soft-feel layer was prepared from a liquid coating composition of the following components, the amounts are in parts by weight (pbw)

| Component | pbw |
|---|---|
| Duranol T5652 (polycarbonate diol) | 30.35 |
| Mixture of organic solvents | 49.00 |
| Additives (UV stabilizer, surface additive) | 2.59 |
| Matting agent | 4.45 |
| Acidic Curing catalyst | 3.34 |
| Cymel 303 (melamine crosslinker) | 10.28 |

The liquid coating composition was drawn down on a substrate and allowed to cure for 5 minutes at 171°C. The dry film layer thickness of the resulting low-gloss soft-feel clear coat was in the range of 27 to 33 µm.
The gloss of the low-gloss soft-feel clear coat was below 3 gloss units. The gloss did not increase upon thermoforming on both flat and structured surfaces, nor on laminating steps. No cracks were detectable after thermoforming, and the resistance to methylethyl ketone (MEK) and to marring was good.

### Comparative Example A

The soft-feel clear coat of Example 2 of US 2003/0211334 A was prepared and cured. The clear coat was applied to a polyethylene terephthalate carrier, without preparing the entire laminate. The clear coat was cured for 5 minutes at 171°C and then tested for soft-feel texture, MEK resistance, and mar resistance (thumbnail scratch). The soft-feel properties could not be determined due to insufficient cure of the clear coat. The clear coat was very poor for MEK resistance and mar resistance. This is usually an indicator of insufficient cure, so the film was cured for an additional 5 minutes at 171°C. The MEK and mar results were the same, and the clear coat also developed a yellow colour after the additional cure.

### Comparative Example B

### The soft-feel

The soft-feel clear coat of Example 3 of US 2003/0211334 A was prepared and cured and tested as above for Comparative Example A. The clear coat showed good MEK resistance, very good mar resistance, and soft-feel texture.
A laminate as described in Example 3 of US 2003/0211334 A was prepared. Before lamination, the gloss of the soft-feel clear coat was below 20 gloss units. After lamination, the gloss was above 20 gloss units. The gloss remained above 20 gloss units after thermoforming. The soft-feel texture of this sample also changed significantly after lamination. The film became hard and slick, bearing no resemblance to a soft-feel texture. The sample also showed very poor intercoat adhesion, cracking over the adhesive in areas where the film was elongated.

## Claims

1. A thermoformable paint film laminate comprising, in the following order,
a) a backing sheet layer of thermoplastic resin,
b) optionally, an adhesive layer,
c) at least one intermediate layer,
d) a low-gloss soft-feel layer having a surface having a gloss at 60° of at most 20 gloss units, measured according to ASTM D 2457,
e) a pressure-sensitive adhesive layer having a higher adhesion to the removable protective layer f) than to the low-gloss soft-feel layer d), and
f) a removable protective layer,
wherein the low-gloss soft-feel layer d) is obtained by applying a liquid coating composition on the at least one intermediate layer c) and drying and curing the liquid coating composition, and wherein the liquid coating composition comprises a polycarbonate diol and a hydroxyl-reactive crosslinker.

2. The thermoformable paint film laminate according to claim 1, wherein the backing sheet layer a) comprises a thermoplastic copolymer of acrylonitrile, butadiene, and styrene (ABS).

3. The thermoformable paint film laminate according to claim 1 or 2, wherein the hydroxyl-reactive crosslinker is selected from the group consisting of polyisocyanates and melamine resins.

4. The thermoformable paint film laminate according to any one of the preceding claims, wherein the low-gloss soft-feel layer is a clear coat layer.

5. The thermoformable paint film laminate according to claim 4, wherein the at least one intermediate layer comprises a base coat layer comprising a colour and/or effect-imparting pigment.

6. The thermoformable paint film laminate according to any one of the preceding claims, wherein the backing sheet comprises an adhesive layer on the side opposite to layers b) to f).

7. A process of providing a substrate with a low-gloss soft-feel surface comprising the steps of
a) providing a thermoformable paint film laminate according to any one of the preceding claims 1 to 6,
b) removing the removable protective layer,
c) thermoforming the thermoformable paint film laminate to a three-dimensional configuration corresponding to the shape of the substrate, and
d) back-injecting, back-pressing, back-casting or back-foaming the backing sheet layer of the thermoformed paint film laminate with a thermoplastic or thermohardening resin.

8. A process of providing a substrate with a low-gloss soft-feel surface comprising the steps of
a) providing a thermoformable paint film laminate according to claim 6,
b) removing the removable protective layer,
c) thermoforming the thermoformable paint film laminate to a three-dimensional configuration corresponding to the shape of the substrate, and
d) adhesively bonding the thermoformed paint film laminate to the substrate, wherein the adhesive layer on the backing sheet faces the surface of the substrate.

## Patentansprüche

1. Wärmeformbare Farbfolienbeschichtung umfassend in der folgenden Reihenfolge
a) eine stützende Lagenschicht aus thermoplastischem Harz,
b) wahlweise eine Klebeschicht,
c) mindestens eine Zwischenschicht,
d) eine mattglänzende Softfeel-Schicht mit einer Oberfläche mit einem Glanz bei 60° von höchstens 20 Glanzeinheiten, gemessen nach ASTM D 2457,
e) eine druckempfindliche Klebeschicht mit einer höheren Haftung an der entfernbaren Schutzschicht f) als an der mattglänzenden Soft-feel-Schicht d), und
f) eine entfernbare Schutzschicht,
wobei man die mattglänzende Softfeel-Schicht d) erhält, indem eine flüssige Beschichtungszusammensetzung auf die mindestens eine Zwischenschicht c) aufgetragen wird, und die flüssige Beschichtungszusammensetzung getrocknet und ausgehärtet wird, und wobei die flüssige Beschichtungszusammensetzung ein Polycarbonatdiol und einen hydroxylreaktiven Vernetzer umfasst.

2. Wärmeformbare Farbfolienbeschichtung nach Anspruch 1, wobei die stützende Lagenschicht a) ein thermoplastisches Copolymer aus Acrylnitril, Butadien und Styrol (ABS) umfasst.

3. Wärmeformbare Farbfolienbeschichtung nach Anspruch 1 oder 2, wobei der hydroxylreaktive Vernetzer aus der Gruppe ausgewählt ist, bestehend aus Polyisocyanaten und Melaminharzen.

4. Wärmeformbare Farbfolienbeschichtung nach einem der vorhergehenden Ansprüche, wobei die mattglänzende Softfeel-Schicht eine Klarlackschicht ist.

5. Wärmeformbare Farbfolienbeschichtung nach Anspruch 4, wobei die mindestens eine Zwischenschicht eine Basisschicht umfasst, umfassend eine Farbe und/oder ein Effekt verleihendes Pigment.

6. Wärmeformbare Farbfolienbeschichtung nach einem der vorhergehenden Ansprüche, wobei die stützende Lage eine Klebeschicht auf der Seite gegenüber den Schichten b) bis f) umfasst.

7. Verfahren der Bereitstellung eines Substrates mit einer mattglänzenden Softfeel-Oberfläche umfassend die folgenden Schritte
a) Bereitstellen einer wärmeformbaren Farbfolienbeschichtung nach einem der vorhergehenden Ansprüche 1 bis 6,
b) Entfernen der entfernbaren Schutzschicht,
c) Warmformen der wärmeformbaren Farbfolienbeschichtung auf eine dreidimensionale Konfiguration entsprechend der Form des Substrates, und
d) Hinterspritzen, Hinterdrücken, Hintergießen oder Hinterschäumen der stützenden Lagenschicht der warmgeformten Farbfolienbeschichtung mit einem thermoplastischen oder wärmehärtenden Harz.

8. Verfahren der Bereitstellung eines Substrates mit einer mattglänzenden Softfeel-Oberfläche umfassend die folgenden Schritte:
a) Bereitstellen einer wärmeformbaren Farbfolienbeschichtung nach Anspruch 6,
b) Entfernen der entfernbaren Schutzschicht,
c) Warmformen der wärmeformbaren Farbfolienbeschichtung auf eine dreidimensionale Konfiguration entsprechend der Form des Substrates, und
d) Verkleben der warmegeformten Farbfolienbeschichtung mit dem Substrat, wobei die Klebeschicht auf der stützenden Lage der Oberfläche des Substrates zugewandt ist.

## Revendications

1. Stratifié de film de peinture thermoformable comprenant, dans l'ordre suivant,
a) une couche de feuille de doublage de résine thermoplastique,
b) éventuellement, une couche adhésive,
c) au moins une couche intermédiaire,
d) une couche douce au toucher et à faible brillant ayant une surface ayant un brillant de plus de 20 unités de brillant à 60°, mesuré selon la norme ASTM D 2457,
e) une couche adhésive sensible à la pression ayant une adhérence à la couche de protection amovible f) supérieure à celle à la couche douce au toucher et à faible brillant d), et
f) une couche de protection amovible,
où la couche douce au toucher et à faible brillant d) est obtenue par application d'une composition de revêtement liquide sur l'au moins une couche intermédiaire c) et par séchage et durcissement de la composition de revêtement liquide, et où la composition de revêtement liquide comprend un polycarbonate diol et un agent de réticulation réactif avec des groupes hydroxyle.

2. Stratifié de film de peinture thermoformable selon la revendication 1, dans lequel la couche de feuille de doublage a) comprend un copolymère thermoplastique d'acrylonitrile, de butadiène et de styrène (ABS).

3. Stratifié de film de peinture thermoformable selon la revendication 1 ou 2, dans lequel l'agent de réticulation réactif avec des groupes hydroxyle est choisi dans le groupe constitué de polyisocyanates et de résines de mélamine.

4. Stratifié de film de peinture thermoformable selon l'une quelconque des revendications précédentes, dans lequel la couche douce au toucher et à faible brillant est une couche de revêtement transparente.

5. Stratifié de film de peinture thermoformable selon la revendication 4, dans lequel l'au moins une couche intermédiaire comprend une couche de revêtement de base comprenant un pigment conférant un effet et/ou une couleur.

6. Stratifié de film de peinture thermoformable selon l'une quelconque des revendications précédentes, dans lequel la feuille de doublage comprend une couche adhésive sur le côté opposé aux couches b) à f).

7. Procédé de fourniture d'un substrat avec une surface douce au toucher et à faible brillant comprenant les étapes qui consistent :
a) à fournir un stratifié de film de peinture thermoformable selon l'une quelconque des revendications 1 à 6,
b) à retirer la couche de protection amovible,
c) à thermoformer le stratifié de film de peinture thermoformable en une configuration tridimensionnelle correspondant à la forme du substrat, et
d) à appliquer une rétro-injection, une rétro-pression, un rétro-moulage ou un rétro-moussage à la couche de feuille de doublage du stratifié de film de peinture thermoformé avec une résine thermoplastique ou thermodurcissable.

8. Procédé de fourniture d'un substrat avec une surface douce au toucher et à faible brillant comprenant les étapes qui consistent :
a) à fournir un stratifié de film de peinture thermoformable selon la revendication 6,
b) à retirer la couche de protection amovible,
c) à thermoformer le stratifié de film de peinture thermoformable en une configuration tridimensionnelle correspondant à la forme du substrat, et
d) à coller de manière adhésive le stratifié de film de peinture thermoformé au substrat, où la couche adhésive sur la feuille de doublage fait face à la surface du substrat.
